# EUROPÄISCHE PATENTSCHRIFT

(11) **EP 3 227 979 B1**
(45) Veröffentlichungstag und Bekanntmachung des Hinweises auf die Patenterteilung: **27.05.2020**
(21) Anmeldenummer: 16700539.6
(22) Anmeldetag: 07.01.2016
(51) Int. Cl.: H02G 1/06

(54) **VERFAHREN UND VORRICHTUNG ZUM VERLEGEN VON GASISOLIERTEN ROHRLEITERN**
METHOD AND DEVICE FOR LAYING GAS-INSULATED TUBULAR CONDUCTORS
PROCÉDÉ ET DISPOSITIF PERMETTANT LA POSE DE CÂBLES À ISOLATION GAZEUSE

(30) Priorität: 30.01.2015 DE 102015201659
(43) Veröffentlichungstag der Anmeldung: 11.10.2017
(73) Patentinhaber: Siemens Aktiengesellschaft, 80333 München (DE)
(72) Erfinder: DEHLER, Andreas, 80469 München (DE); EBNER, Andreas, 90419 Nürnberg (DE); IMAMOVIC, Denis, 90409 Nürnberg (DE); MAGIER, Tomasz, 91330 Eggolsheim (DE); SCHEDL, Stefan, 90614 Ammerndorf (DE)
(86) Internationale Anmeldenummer: PCT/EP2016/050181
(87) Internationale Veröffentlichungsnummer: WO 2016/120035

(56) Entgegenhaltungen:
- DE-A1- 19 627 381
- DE-A1-102008 050 488
- FR-A1- 2 716 751
- JP-A- H10 155 219

## Beschreibung

Die Erfindung betrifft eine Vorrichtung zum Verlegen von gasisolierten Rohrleitern.

Gasisolierte Rohrleiter (GIL) umfassen üblicherweise einen elektrischen Leiter, der mittels eines geeigneten Gases elektrisch von einer Umgebung isoliert ist. Der Leiter ist daher üblicherweise in einem gasdichten Rohr angeordnet. Ein solcher Rohrleiter ist beispielsweise aus der DE 296 14 717 U1 bekannt.

Da zum Verlegen von gasisolierten Rohrleitern bestimmte Bedingungen wie beispielsweise Sauberkeit, Staubfreiheit und gute Beleuchtung gewährleistet sein müssen, erfolgt die Verlegung mittels geeigneter Vorrichtungen, die üblicherweise Montageplattformen umfassen, die abhängig von herrschenden Platzverhältnissen in jedem Projekt neu konstruiert und errichtet werden. Bei längeren GIL-Strecken werden die Vorrichtungen nach Abschluss eines Abschnittes der Rohrleiter abgebaut und an einer anderen Stelle neu errichtet. Für die Neuerrichtung oder auch bei Baustellenende können bereits verbaute Teile der Vorrichtungen nur beschränkt wiederverwendet werden. Die übrigen Teile müssen entsorgt werden.

Aus der DE 196 27 381 A1 ist ein Verfahren zum Installieren einer gasisolierten Rohrleiter-Kabelanlage bekannt, bei dem ein neben einer Kabel-Trasse gefertigter Unterabschnitt des gasisolierten Rohrleiters mit Hilfe mehrerer synchron gesteuerter fahrbarer Hebezeuge auf die in einem Graben angeordneten Auflagepunkte aufgelegt wird, um mit einem bereits im Graben verlegten Unterabschnitt verbunden zu werden.

Die JP 10155219 A beschreibt ein Verlegeverfahren für eine Tunnelverlegung eines gasisolierten Übertragungskabels mittels einer bewegbaren Plattform.

In der FR 2 716 751 A1 ist ein weiteres Verfahren zum mobilen Verlegen von gasisolierten Leitungen offenbart.

Die Aufgabe der Erfindung ist es, eine Vorrichtung der eingangs genannten Art vorzuschlagen, die eine günstige und zuverlässige Verlegung von gasisolierten Rohrleitern ermöglicht.

Die Aufgabe wird bei einer artgemäßen Vorrichtung dadurch gelöst, dass fahrbare Fortbewegungsmittel zur Fortbewegung der Vorrichtung vorgesehen sind.

Die fahrbaren Fortbewegungsmittel der Vorrichtung erlauben es vorteilhaft, auf den Abbau und die Neuerrichtung der Vorrichtung zu verzichten. Dadurch kann das Verlegen der gasisolierten Rohrleiter schneller und damit kostengünstiger durchgeführt werden. Zudem kann die erfindungsgemäße Vorrichtung zum Verlegen mehrerer Streckenabschnitte der gasisolierten Rohrleiter verwendet werden. Projektabhängige Ausrichtung von etwaigen Montageräumen der Vorrichtung entfällt ebenfalls. Dies senkt die Fehlerwahrscheinlichkeit bei Errichtung von neuen GIL-Strecken. Weitere Vorteile der erfindungsgemäßen Vorrichtung ergeben sich aus der Möglichkeit einer Optimierung aller verwendeten Bauteile, Verfahren und Arbeitsschritte bei der GIL-Verlegung. Alle Bauteile der Vorrichtung können in jedem Projekt gleichartig angeordnet werden, wodurch keine Umstellung von Fachpersonal auf neue Arbeitsplätze erforderlich ist. Die erfindungsgemäße Vorrichtung ist vorteilhafterweise nach ihrer Fortbewegung zum nächsten Einsatzort sofort einsatzfähig. Weitere Vorteile sind: Eine Projektabhängige Konstruktion von etwaigen Montage- beziehungsweise Lagerhallen entfällt; Vorlaufzeiten für das Errichten etwaiger temporärer Bauwerke inklusive von Unterkonstruktionen können vermieden werden; Nachlaufzeiten für das Abreißen der temporären Bauwerke und der Unterkonstruktion können ebenfalls vermieden werden; erneute Einrichtung von Arbeitsplätzen und einer Stromversorgung fällt weg. Durch eine teilweise Mechanisierung der Arbeitsabläufe unter immer gleichbleibenden Bedingungen können Abläufe zeitlich beschleunigt werden. Zudem kann auf diese Weise vorteilhaft die Produktqualität und die Zuverlässigkeit der GIL erhöht werden.

Die fahrbaren Fortbewegungsmittel umfassen geeigneterweise ein Fahrwerk, das zur Fortbewegung der Einrichtung geeignet ist. Beispielsweise können die Fortbewegungsmittel Räder oder Ketten beziehungsweise Raupen umfassen.

Gemäß einer Ausführungsform der Erfindung sind die Fortbewegungsmittel zur passiven Fortbewegung der Vorrichtung eingerichtet. Dies bedeutet, dass die Vorrichtung nicht selbsttätig fahrbar ist. In diesem Fall können die Fortbewegungsmittel geeignete Verbindungsmittel zum Verbinden mit einem separaten Fahrzeug aufweisen. Die Vorrichtung ist dann mittels des Fahrzeugs verlagerbar. Auch die Möglichkeit des Versetzens der Vorrichtung mit einem Kran/Lkw bzw. durch das Ziehen der Montagevorrichtung auf dem vorpräparierten Untergrund (z.B. auf Schienen o.a. Elementen) ist in diesem Zusammenhang denkbar. Geeigneterweise umfasst die Vorrichtung Unterkonstruktionen, die mit den Schienen bzw. den anderen Elementen zusammenwirken können.

Gemäß einer alternativen Ausführungsform der Erfindung sind die Fortbewegungsmittel zur aktiven Fortbewegung der Vorrichtung eingerichtet. Dazu umfassen die Fortbewegungsmittel beispielsweise einen geeigneten Motor. In diesem Fall kann die Vorrichtung sich selbsttätig fortbewegen. Auf das separate Fahrzeug kann damit verzichtet werden.

Erfindungsgemäß umfasst die Vorrichtung eine Montageplattform mit einer Einrichtung zur Montage der Rohrleiter. Es wird als vorteilhaft angesehen, wenn die Einrichtung Räume umfasst, die eine oder mehrere der folgenden Bedingungen für das Verlegen der gasisolierten Rohrleiter bieten: Sauberkeit, Staubfreiheit, geringe Luftbewegungen, geregelte Temperatur und Luftfeuchtigkeit, gute Beleuchtung, Witterungsunabhängigkeit, Einhaltung der Arbeitssicherheitsbestimmungen, Verwendung von Lasthebemitteln, gute Reinigungsmöglichkeit von Montageplätzen, einen ebenen, gut zu reinigenden Fussboden, Möglichkeiten zur zugfreien Abtrennung von Arbeitsbereichen. Ferner kann die Montageplattform Schweißvorrichtungen und/oder anderes Werkzeug, zudem auch wenigstens eine Zentrier- und/oder Ausrichtvorrichtung umfassen. Die Vorrichtung kann des Weiteren über geeignete Zug- und Hebemechanismen verfügen. Die Zug- und Hebemechanismen können dazu eingesetzt werden, einzelne Werkzeuge und Montagevorrichtungen, wie beispielsweise Schweißwerkzeuge, für mehrere Arbeitsplätze verfügbar zu machen und/oder die Rohrleiter zu verlagern.

Gemäß der Erfindung weist die Montageplattform eine Tragkraft von mindestens 500 kg pro Quadratmeter, vorzugsweise mindestens 700 kg pro Quadratmeter auf. Auf diese Weise ist eine Vorrichtung zum Verlegen von gasisolierten Rohrleitern bereitgestellt, die auch eine Verlegung mehrerer Rohrleiterstränge nebeneinander erlaubt.

Gemäß einer weiteren Ausführungsform der Erfindung umfasst die Vorrichtung eine Zwischenlagereinheit zum Zwischenlagern der Rohrleiter. Durch das Zwischenlagern der Rohrleiter lässt sich der Vorgang des Verlegens zusätzlich beschleunigen.

Ferner betrifft die Erfindung ein Verfahren zum Verlegen von gasisolierten Rohrleitern.

Eine Aufgabe der Erfindung ist es, ein derartiges Verfahren vorzuschlagen, das ein günstiges und zuverlässiges Verlegen der Rohrleiter ermöglicht.

Die Aufgabe wird erfindungsgemäß durch ein Verfahren gelöst, bei dem nach einer Montage eines Abschnittes der Rohrleiter mittels einer dazu vorgesehenen Montagevorrichtung die Montagevorrichtung fortbewegt wird, worauf mittels der Montagevorrichtung ein weiterer Abschnitt der Rohrleiter montiert wird.

Ein einzelner Abschnitt der Rohrleiter kann dabei aus einer Aneinanderreihung von mehreren Rohrleitern bestehen. In einem solchen Fall weist der Abschnitt eine Länge bis zu mehreren Hundert Metern, beispielsweise bis zu 1000 m auf. Ein einzelner Abschnitt der Rohrleiter kann aber auch beispielsweise aus einem einzelnen Rohrleiter bestehen. In diesem Fall weist der Abschnitt eine Länge zwischen wenigen Metern (beispielsweise 2 m) und 20 m auf.

Vorteilhaft wird durch das erfindungsgemäße Verfahren erreicht, dass ein Abbauen und Neuerrichten von Bauteilen der Vorrichtung nicht notwendig ist. Hierbei ergeben sich weitere Vorteile des erfindungsgemäßen Verfahrens, die denjenigen entsprechen, die bereits im Zusammenhang mit der erfindungsgemäßen Vorrichtung beschrieben wurden.

Die bei dem erfindungsgemäßen Verfahren eingesetzte Vorrichtung zum Verlegen von gasisolierten Rohrleitern wird durch eine zuvor beschriebene erfindungsgemäße Vorrichtung realisiert.

Die Erfindung wird im Folgenden anhand von Ausführungsbeispielen, die in den Figuren 1 - 4 dargestellt sind, näher erläutert.
Figur 1 zeigt einen Querschnitt durch einen gasisolierten Rohrleiter in schematischer Darstellung;
Figur 2 zeigt ein Ausführungsbeispiel einer erfindungsgemäßen Vorrichtung in schematischer Darstellung;
Figur 3 zeigt ein weiteres Ausführungsbeispiel der erfindungsgemäßen Vorrichtung sowie einen Ablauf ihrer Verlagerung in schematischer Darstellung;
Figur 4 zeigt ein alternatives weiteres Ausführungsbeispiel der erfindungsgemäßen Vorrichtung sowie einen Ablauf ihrer Verlagerung in schematischer Darstellung.

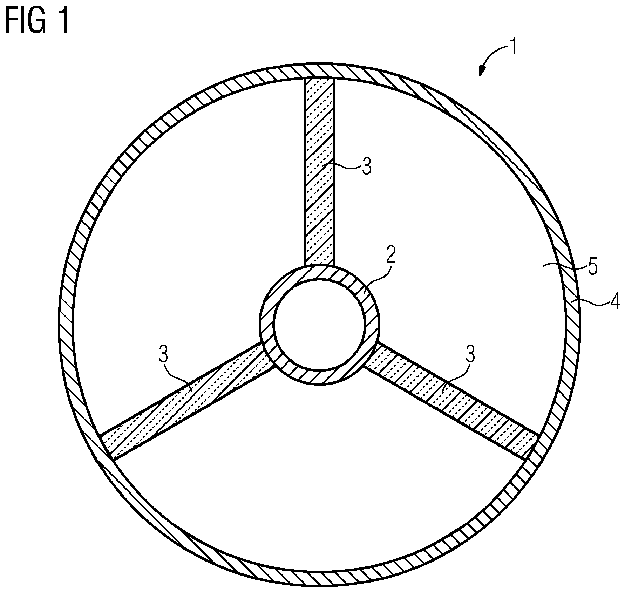

Im Einzelnen ist in Figur 1 ein Querschnitt durch einen gasisolierten Rohrleiter 1 dargestellt. Der gasisolierte Rohrleiter 1 umfasst einen stromführenden Innenleiter 2 in Form eines Rohres, das beispielsweise aus Aluminium hergestellt ist. Der Innenleiter 2 ruht auf Stützisolatoren 3, die beispielsweise als Gießharzisolatoren realisiert sind. Die Isolatoren 3 zentrieren den Innenleiter 2 innerhalb einer äußeren Hülle 4. Die äußere Hülle 4 kann beispielsweise ebenfalls aus Aluminium gefertigt sein. Bei einer direkten Erdverlegung kann die äußere Hülle 4 zusätzlich mit einer geeigneten Beschichtung versehen sein. Zwischen dem Innenleiter 2 und der äusseren Hülle 4 befindet sich ein Zwischenraum 5. Der Zwischenraum 5 ist mit einem Isoliergas gefüllt. Das Isoliergas kann beispielsweise aus einem Gasgemisch bestehen. Das Gasgemisch kann beispielsweise aus 80 Vol-% N₂ und 20 Vol-% SF₆ gebildet sein. Es sind jedoch auch andere Gase beziehungsweise Gasgemische denkbar. Der sich in Längsrichtung erstreckende gasisolierte Rohrleiter 1 bildet einen Strang. Eine Rohrleitung kann mehrere solcher Stränge nebeneinander angeordnet umfassen.

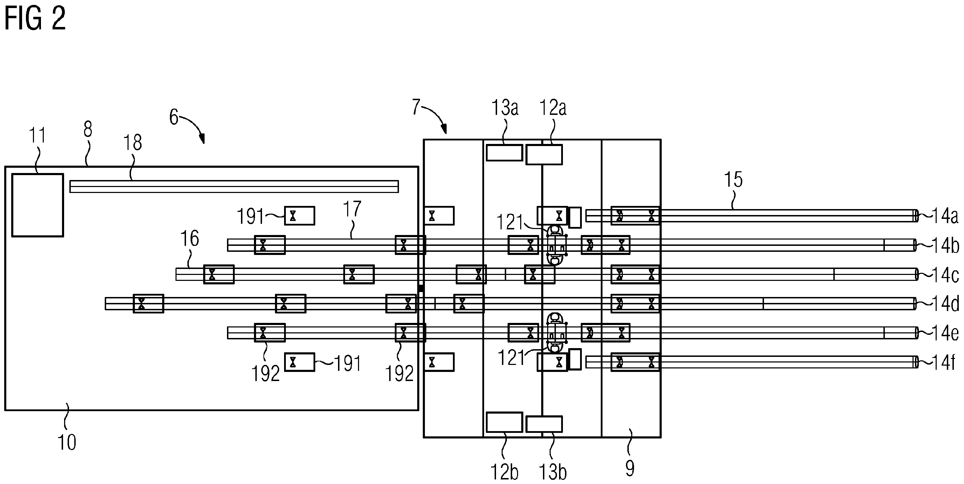

In Figur 2 ist ein Ausführungsbeispiel einer erfindungsgemäßen Vorrichtung 6 in einer Draufsicht dargestellt. Die Vorrichtung 6 umfasst eine Montageplattform 7 und eine Zwischenlagereinheit 8. Die Montageplattform 7 und die Zwischenlagereinheit 8 sind miteinander lösbar verbunden. Die Montageplattform 7 weist einen fahrbaren Untersatz (in der Darstellung der Figur 2 nicht sichtbar) sowie einen Plattformboden 9. Entsprechend umfasst die Zwischenlagereinheit 8 ebenfalls einen fahrbaren Untersatz (nicht sichtbar) und einen Lagereinheitboden 10.

Die Vorrichtung umfasst zudem Schweißvorrichtungen 12a, 12b sowie Werkzeugeinrichtungen 13a, 13b, die mit weiteren zur Montage der Rohrleitungen notwendigen Werkzeugen ausgestattet sind. Die Schweißvorrichtungen 12a, 12b und die Werkzeugeinrichtungen 13a, 13b sind auf der Montageplattform angeordnet. Die Vorrichtung 6 umfasst ferner einen Dieselgenerator 11, der auf der Zwischenlagereinheit 8 angeordnet ist. Der Dieselgenerator dient zur Energieversorgung der Schweißvorrichtungen 12a, 12b und anderer Werkzeuge der Vorrichtung 6. Zudem weist die Vorrichtung 6 Ausrichtvorrichtungen 191, 192, wobei die Ausrichtvorrichtungen 192 bereits mit einem Rohr bestückt sind. Des Weiteren sind Zentrier- und Schweißwerkzeuge 121 vorgesehen. Die Zentrier- und Schweißwerkzeuge 121 sind an einer Decke der Vorrichtung 6 befestigbar und können mehrere Arbeitsplätze über geeignete Zug- und Hebemechanismen (in Figur 2 nicht dargestellt) bedienen.

Die Vorrichtung 6 ist zu einer gleichzeitigen Verlegung von sechs Strängen 14a-14f von Rohrleitern eingerichtet. Jeder Strang 14a-14f umfasst einen oder mehrere Rohrleiter. Beispielsweise umfasst der Strang 14a lediglich einen einzelnen Rohrleiter 15 und der Strang 14b zwei Rohrleiter 16 und 17. Die Rohrleiter weisen in dem in Figur 2 dargestellten Ausführungsbeispiel jeweils eine Länge von 11 m bis 14 m auf. Die Rohrleiter werden für jeden Strang mittels der Vorrichtung zunächst zu einem Rohrleiterabschnitt von etwa 500 m Länge zusammengesetzt. Anschließend werden die Abschnitte endgültig mit den bereits verlegten Rohrleitern verbunden.

Der Plattformboden 9 weist genügend Tragkraft auf, so dass er unter der Last der zu montierenden Rohrleiter nicht zusammenbricht. Im dargestellten Ausführungsbeispiel beträgt die Tragkraft der Montageplattform 7 und der Zwischenlagerplattform jeweils ca. 700 kg/m².

Die Zwischenlagereinheit 8 ist dazu eingerichtet, Rohrleiter für die Weiterverarbeitung zwischenzulagern. Im in Figur 2 dargestellten Ausführungsbeispiel ist ein Rohrleiter 18 auf der Zwischenlagereinheit angeordnet.

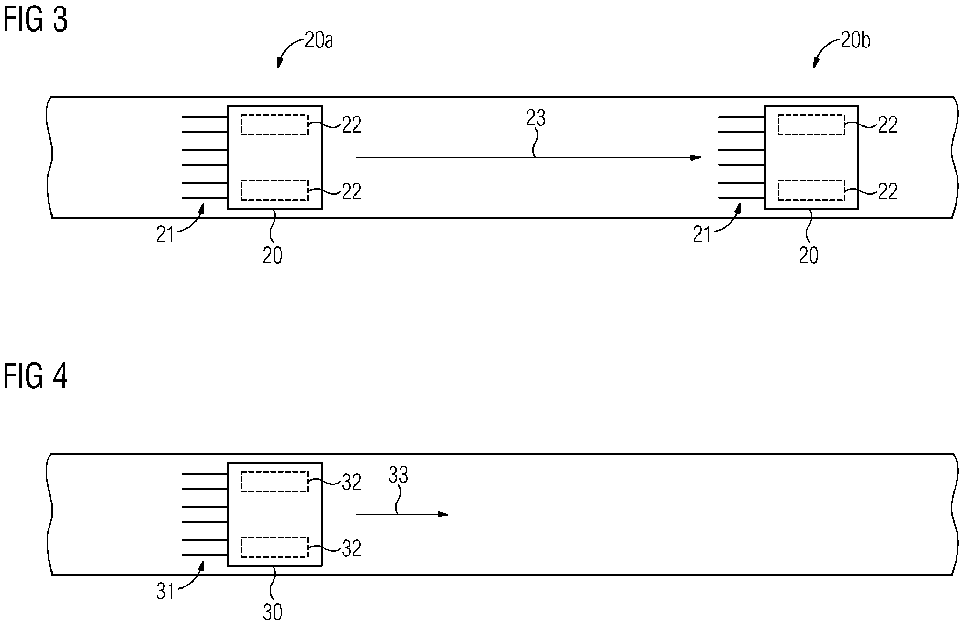

In Figur 3 ist eine grundsätzliche Arbeitsweise einer Ausführungsform einer erfindungsgemäßen Vorrichtung 20 skizziert. In einer ersten Position 20a der Vorrichtung 20 werden Rohrleiter 21 in sechs Strängen montiert. Nach der Fertigstellung einer Abschnittes der Stränge von etwa 500 m Länge wird die Vorrichtung 20 mittels fahrbarer Fortbewegungsmittel 22 in eine zweite Position 20b fortbewegt, die von der ersten Position 20a etwa 500 m entfernt ist, was in Figur 3 durch einen Pfeil 23 angedeutet ist. Anschließend wird an der zweiten Position 20b ein weiterer Abschnitt der Stränge der Rohrleitungen 21 montiert.

In Figur 4 ist eine mögliche alternative Arbeitsweise einer Ausführungsform einer erfindungsgemäßen Vorrichtung 30 skizziert. Gemäß dieser Variante werden mittels der Vorrichtung 30 Rohrleiter 31 in sechs Strängen montiert. Nach der Fertigstellung eines Abschnittes der Stränge, der in diesem Fall einer Länge eines einzelnen Rohrleiters entspricht, also im dargestellten Ausführungsbeispiel einer Länge von etwa 11 m bis 14 m, beispielsweise 11,5 m, wird die Vorrichtung 30 mittels fahrbarer Fortbewegungsmittel 32 um etwa eine Rohrleiterlänge fortbewegt, was in Figur 4 durch einen Pfeil 33 angedeutet ist. Anschließend wird für jeden der Stränge ein weiterer Rohrleiter montiert.

### Bezugszeichenliste

- 1: gasisolierter Rohrleiter
- 2: Innenleiter
- 3: Stützisolator
- 4: äußere Hülle
- 5: Zwischenraum
- 6, 20, 30: Vorrichtung zum Verlegen gasisolierter Rohrleiter
- 7: Montageplattform
- 8: Zwischenlagereinheit
- 9: Plattformboden
- 10: Lagereinheitboden
- 11: Dieselgenerator
- 12a, 12b: Schweißvorrichtung
- 13a, 13b: Werkzeugeinrichtungen
- 121: Zentrier- und Schweißwerkzeuge
- 191, 192: Ausrichtvorrichtung
- 14a-f: Strang von Rohrleitern
- 16, 17, 18: Rohrleiter
- 20a, 20b: Position der Vorrichtung
- 21, 31: Rohrleiter
- 22, 32: Fortbewegungsmittel
- 23, 33: Pfeil

## Patentansprüche

1. Vorrichtung (6, 20, 30) zum Verlegen von gasisolierten Rohrleitern (1, 15 - 18, 21, 31), mit
fahrbaren Fortbewegungsmitteln (22, 32) zur Fortbewegung der Vorrichtung (6, 20, 30),
**dadurch gekennzeichnet, dass** die Vorrichtung (6, 20, 30) eine Montageplattform (7) mit einer Einrichtung zur Montage der Rohrleiter (1, 15-18, 21) umfasst, wobei
die Montageplattform (7) eine Tragkraft von mindestens 500 kg/m² aufweist, so dass eine Verlegung mehrerer Rohrleiterstränge nebeneinander erlaubt ist.

2. Vorrichtung (6, 20, 30) nach Anspruch 1, wobei die Fortbewegungsmittel (22, 32) zur passiven Fortbewegung der Vorrichtung (6, 20, 30) eingerichtet sind.

3. Vorrichtung (6, 20, 30) nach Anspruch 1, wobei die Fortbewegungsmittel (22, 32) zur aktiven Fortbewegung der Vorrichtung (6, 20, 30) eingerichtet sind.

4. Vorrichtung (6, 20, 30) nach einem der vorangehenden Ansprüche, wobei die Vorrichtung (6, 20, 30) eine Zwischenlagereinheit (8) zum Zwischenlagern der Rohrleiter umfasst. (6, 20, 30)

5. Verfahren zum Verlegen von gasisolierten Rohrleitern (1, 15-18, 21, 31), bei dem nach einer Montage eines Abschnittes der Rohrleiter mittels einer dazu vorgesehenen Montagevorrichtung (6, 20, 30) die Montagevorrichtung (6, 20, 30) fortbewegt wird, worauf mittels der Montagevorrichtung (6, 20, 30) ein weiterer Abschnitt der Rohrleiter montiert wird, wobei als Montagevorrichtung (6, 20, 30) eine Vorrichtung (6, 20, 30) nach Anspruch 1 eingesetzt wird.

## Claims

1. Device (6, 20, 30) for laying gas-insulated tubular conductors (1, 15 - 18, 21, 31), having
drivable transport means (22, 32) for moving the device (6, 20, 30),
**characterized in that**
the device (6, 20, 30) comprises an assembly platform (7) having a unit for assembling the tubular conductors (1, 15-18, 21), wherein the assembly platform (7) has a carrying force of at least 500 kg/m², such that it is rendered possible to lay multiple tubular conductor strands adjacent to one another.

2. Device (6, 20, 30) according to Claim 1, wherein the transport means (22, 32) are configured for the passive movement of the device (6, 20, 30).

3. Device (6, 20, 30) according to Claim 1, wherein the transport means (22, 32) are configured for the active movement of the device (6, 20, 30).

4. Device (6, 20, 30) according to any one of the preceding claims, wherein the device (6, 20, 30) comprises an intermediate storage unit (8) for the intermediate storage of the tubular conductors.

5. Method for laying gas-insulating tubular conductors (1, 15-18, 21, 31) in which after the assembly of a section of the tubular conductors by means of an assembly device (6, 20, 30) that is provided for this purpose, the assembly device (6, 20, 30) is moved and subsequently a further section of the tubular conductors is assembled by means of the assembly device (6, 20, 30), wherein a device (6, 20, 30) according to Claim 1 to 6 is used as the assembly device (6, 20 30).

## Revendications

1. Installation (6, 20, 30) de pose de conducteurs (1, 15 à 18, 21, 31) tubulaires à isolation par du gaz, comprenant
des moyens (22, 32) de déplacement itinérants pour faire avancer l'installation (6, 20, 30),
**caractérisée en ce que**
l'installation (6, 20, 30) comprend une plateforme (7) de montage ayant un dispositif de montage des conducteurs (1, 15 à 18, 21) tubulaires, dans laquelle
la plateforme (7) de montage a une force portante d'au moins 500 kg/m², de manière à permettre la pose de plusieurs tronçons de conducteurs tubulaires les uns à côté des autres.

2. Installation (6, 20, 30) suivant la revendication 1, dans laquelle les moyens (22, 32) de déplacement sont conçus pour faire avancer passivement l'installation (6, 20, 30).

3. Installation (6, 20, 30) suivant la revendication 1, dans laquelle les moyens (22, 32) de déplacement sont conçus pour faire avancer activement l'installation (6, 20, 30).

4. Installation (6, 20, 30) suivant l'une des revendications précédentes, dans laquelle l'installation (6, 20, 30) comprend (6, 20, 30) une unité (8) d'entreposage intermédiaire pour l'entreposage intermédiaire des conducteurs tubulaires.

5. Procédé de pose de conducteurs (1, 15 à 18, 21, 31) tubulaires à isolation par du gaz, dans lequel, après un montage d'une partie des conducteurs tubulaires au moyen d'une installation (6, 20, 30) de montage prévue à cet effet, on fait avancer l'installation (6, 20, 30) de montage, dans lequel, au moyen de l'installation (6, 20, 30) de montage, on monte une autre partie des conducteurs tubulaires, en utilisant comme installation (6, 20, 30) de montage une installation (6, 20, 30) de montage suivant la revendication 1.
